# EUROPÄISCHE PATENTSCHRIFT

(11) **EP 3 971 115 B1**
(45) Veröffentlichungstag und Bekanntmachung des Hinweises auf die Patenterteilung: **22.03.2023**
(21) Anmeldenummer: 21193570.5
(22) Anmeldetag: 27.08.2021
(51) Int. Cl.: B65G 47/14, B65G 47/51, B65G 23/44

(54) **VEREINZELUNGS-BANDEINHEIT SOWIE VERFAHREN FÜR IHREN BETRIEB**
SEPARATION BELT UNIT AND METHOD FOR OPERATING THE SAME
UNITÉ DE BANDE DE SÉPARATION, AINSI QUE SON PROCÉDÉ DE FONCTIONNEMENT

(30) Priorität: 22.09.2020 DE 102020124685
(43) Veröffentlichungstag der Anmeldung: 23.03.2022
(73) Patentinhaber: Gerhard Schubert GmbH, 74564 Crailsheim (DE)
(72) Erfinder: Häusler, Hannes, Unterampfrach (DE)
(74) Vertreter: Weickmann & Weickmann PartmbB

(56) Entgegenhaltungen:
- EP-A1- 2 368 818
- EP-A2- 0 339 488
- WO-A1-2011/041869
- US-A- 3 979 018
- US-A- 5 176 299

## Beschreibung

### I. Anwendungsgebiet

Die Erfindung betrifft das Vereinzeln eines Schüttgutes.

### II. Technischer Hintergrund

Wenn Produkte, die als Schüttgut angeliefert werden, einzeln gehandhabt werden sollen, ist immer zunächst eine Vereinzelung des Schüttgutes in seine einzelnen Produkte notwendig, was insbesondere in der Verpackungstechnik häufig der Fall ist, wenn diese Produkte einzeln z.B. in eine Verpackung eingesetzt werden sollen, was in der Regel mittels einer Umsetz-Vorrichtung wie etwa einer Roboter-Straße erfolgt.

Zum Vereinzeln eines Schüttgutes stehen eine Vielzahl von Verfahren und Vorrichtungen zur Verfügung, die etwa mittels gezielten Vibrationen, Druckluft oder mechanischen Hilfsmitteln die Produkte voneinander trennen.

Die verschiedenen Verfahren und Vorrichtungen sind unterschiedlich leistungsfähig und unterscheiden sich auch hinsichtlich der dabei auftretenden Belastungen für das Produkt.

Eine bekannte Vereinzelungs-Vorrichtung besteht darin, mittels eines Förderbandes - oder einer flexiblen Förderkette, die für die Zwecke der vorliegenden Erfindung ebenfalls unter dem Begriff Förderband subsummiert sein soll - in der Seitenansicht zu deren Laufrichtung eine oben offene Schlaufe bildet, die seitlich von Seitenwänden begrenzt ist und als Vorrats-Schlaufe oder Behälter-Schlaufe für ein darin bevorratetes Schüttgut dient.

Durch Aufwickeln dieses Förderbandes auf eine die Vorrats-Schlaufe begrenzende Umlenkwalze oder weiter stromab wird das Volumen der Schlaufe verkleinert und kann der zunehmenden Leerung der Vorrats-Schlaufe so angepasst werden, dass immer in einem gewünschten Umfang einzelne Produkte über die stromabwärtige Umlenkrolle der Vorrats-Schlaufe gelangen und auf ein beispielsweise stromabwärts nachgelagertes Transportband fallen und damit bereits weitestgehend vereinzelt sind.

Hierzu muss also die Schüttung in der Behälter-Schlaufe mindestens auf, besser über die Höhe des Auslaufs, also Oberseite der stromabwärtigen Umlenkwalze, reichen. Auf der gegenüberliegenden Seite der Vorrats-Schlaufe liegt die dortige um Lenk Umlenkwalzen höher oder darüber befindet sich eine Rückwand der Vorratsschlaufe.

Falls der auf diesem Transport-Band dadurch entstehende Produktteppich zu dicht ist, kann dies durch weitere Maßnahmen beeinflusst werden, allerdings sind hierbei nicht nur für das Schlaufen-Band, sondern auch für das nachfolgende Transport-Band - welches häufig Bestandteil der oben erwähnten Umsetz-Vorrichtung ist - nicht nur ein eigener Antrieb sondern auch eine aufwendige Steuerung notwendig, um diese in der richtigen Relation zueinander und damit unabhängig voneinander ansteuern zu können.

Die US 3 979 018A, EP 0 339 488 A2, WO 2011/041869 A1 sowie EP 2 368 818 A1 zeigen jeweils einen Vereinzeler, jedoch ohne Seitenwände und Feder-schlaufe. Die US 3 979 018 A offenbart eine Vereinzelungs-Bandeinheit nach dem Oberbegriff des Anspruchs 1.

### a) Technische Aufgabe

Es ist daher die Aufgabe gemäß der Erfindung, eine Vereinzelungs-Bandeinheit zur Verfügung zu stellen, die einfach in ihrem Aufbau ist, insbesondere über nur einen einzigen Antriebsmotor verfügen muss, und deren Steuerung möglichst einfach ist, und auch eine möglichst einfache Anpassung an unterschiedliche Schüttgüter ermöglicht, sowie ein Verfahren zum Betreiben einer solchen Vereinzelungs-Bandeinheit.

### b) Lösung der Aufgabe

Diese Aufgabe wird durch die Merkmale des Anspruchs 1 gelöst. Vorteilhafte Ausführungsformen ergeben sich aus den Unteransprüchen.

Eine gattungsgemäße Vereinzelungs-Bandeinheit umfasst wie oben beschrieben eine Behälter-Bandeinheit, mit der eine Behälter-Schlaufe zum Bevorraten des Schüttgutes gebildet wird, sowie eine stromabwärts davon angeordnete Transport-Bandeinheit, die dem Abtransport und ggfs. weiterem Beabstanden der bereits im Wesentlichen einzeln auf dem Transport-Band liegenden Produkte dient.

Erfindungsgemäß weist die Behälter-Bandeinheit außer der Behälter-Schlaufe noch eine Feder-Schlaufe auf, in der das Behälter-Band über eine in Richtung Vergrößerung oder Verkleinerung dieser Feder-Schlaufe bewegliche Feder-Umlenkwalze läuft, die vorzugsweise vorgespannt ist.

Vorzugsweise ist die Feder-Umlenkwalze dabei quer zur Laufrichtung des Behälter-Bandes an dieser Stelle beweglich, insbesondere vorgespannt, insbesondere gefedert vorgespannt, und - in Laufrichtung des Behälter-Bandes an dieser Stelle betrachtet - zwischen zwei hierzu benachbarten Gegenhalter-Walzen, insbesondere Gegenhalter-Umlenkwalzen angeordnet und bildet zusammen mit diesen eine Feder-Schlaufe mit variabler Schlaufenlänge des Bandes in der Feder-Schlaufe.

Dadurch passt sich die Größe der Behälter-Schlaufe automatisch der Menge ihres Inhaltes an.

Indem die Feder-Steifigkeit, auch als Feder-Kennlinie oder Feder-Konstante bezeichnet, der Feder-Umlenkwalze variabel und insbesondere einstellbar ist, kann sie auch an das spezifische Gewicht der in der Behälter-Schlaufe aufgenommenen Schüttung angepasst werden.

Vorzugsweise besitzen die beiden Bandeinheiten keine jeweils unabhängigen Antriebe und Steuerungen, sondern einen funktionsvereinigten, also gemeinsamen, Antrieb mit vorzugsweise nur einem Antriebsmotor, der sowohl die Behälter-Bandeinheit als auch die Transport-Bandeinheit antreibt.

Dies vereinfacht und verbilligt den Aufbau dieser Vereinzelungs-Bandeinheit.

Eine Möglichkeit, dies zu erreichen, besteht darin, dass das Behälter-Band der Behälter-Bandeinheit ein endlos umlaufendes Behälter-Band ist und das Behälter-Band und das Abtransport-Band funktionsvereinigt und einstückig miteinander ausgebildet sind, also insbesondere die gesamte Vereinzelungs-Bandeinheit ein insbesondere endlos umlaufendes Förderband, das sogenannte Vereinzelungs-Band, aufweist.

Auf diese Art und Weise kommt die gesamte Vereinzelungs-Bandeinheit mit nur einem Motor und einer Steuerung aus, denn die Steuerung für diesen gemeinsamen Antrieb steuert naturgemäß sowohl die Behälter-Bandeinheit als auch die Abtransport-Bandeinheit.

Doch auch wenn das Behälterband und das Abtransportband getrennte Bänder sind, können diese über einen gemeinsamen Antrieb angetrieben werden, indem die jeweils angetriebenen Umlenkwalzen dieser beiden Bänder miteinander wirkverbunden sind und mit dem einen gemeinsamen Antrieb in Verbindung stehen.

Selbstverständlich kann auch bei getrennten Antrieben für die beiden Bandeinheiten das Behälterband wahlweise ein endloses oder ein endliches Behälterband sein.

Das Behälterband kann auch ein endliches Band sein, welches am einen Ende fixiert und am anderen Ende auf einer Wickelwalze befestigt ist, auf der es aufgewickelt werden kann, wodurch sich die Größe der Behälter-Schlaufe verändern lässt, wenn sich Wickelwalze einerseits und die Fixierung des anderen Endes des Behälterbandes andererseits auf unterschiedlichen Seiten der Behälter-Schlaufe, betrachtet in Laufrichtung des Behälterbandes, befinden.

Auch ein gemeinsamer Antrieb der Wickelwalze einerseits und der Abtransport-Einheit andererseits ist dadurch möglich wie zuvor beschrieben, jedoch benötigt dann vorzugsweise die Wickelwalze oder deren Antrieb einen Freilauf in Abwickel-Richtung, insbesondere wenn das Abtransport-Band ein endloses, umlaufendes Band ist.

Die Steuerung der Vereinzelungs-Bandeinheit erfolgt dabei so, dass im gewünschten Maß, insbesondere laufend, Produkte aus der Behälter-Schlaufe über die stromabwärtige Umlenkwalze der Behälter-Schlaufe - die so genannte Auslauf-Walze - und damit auf das Abtransport-Band gelangen.

Dieses Maß kann eine festgelegte Menge sein, beispielsweise eine bestimmte Anzahl von Produkten - meist festgelegt durch einen Bereich mit einer minimalen und einer maximalen Anzahl - pro Zeiteinheit, oder dieses Maß kann auch von der Steuerung einer stromabwärtigen, nachgelagerten Vorrichtung, z. B. einer Abtransport-Vorrichtung" insbesondere einer Umsetz-Vorrichtung, vorgegeben werden, indem diese an die Vereinzelungs-Steuerung vorgibt, wie viele Produkte pro Zeiteinheit auf das Abtransport-Band gelangen sollen oder auch ob zeitweise keine Produkte vereinzelt werden sollen und auf das Abtransport-Band gelangen sollen, beispielsweise weil die nachgelagerte Vorrichtung momentan ihre Kapazitätsgrenze erreicht hat oder momentan stillsteht und außer Funktion ist.

Falls eine bestimmte vereinzelte Menge an Produkten pro Zeiteinheit gewünscht wird, kann dies - also die Dichte des entstehenden Produkt-Teppichs auf dem Abtransport-Band - mittels eines Sensors gesteuert werden, der die Anzahl der Produkte ermittelt, die über die Auslauf-Walze gelangen und / oder auf den Beginn des Abtransport-Bandes gelangen und abhängig davon zum Beispiel die Geschwindigkeit des Behälter-Bandes steuert. Auch die Feder-Steifigkeit beeinflusst diese Menge an Produkten, also die Dichte des Produktteppichs, indem eine Erhöhung der Feder-Steifigkeit dazu führt, dass die Produkte im Behälter sich höher stapeln und damit auch höher über die Auslauf-Walze hinaus aufgeschüttet sind und somit mehr Produkte über die Auslauf-Walze gelangen.

Falls eine solche Vorgabe nicht existiert, so ist meistens zumindest gewünscht, dass die Produkte auf dem Abtransport-Band in nur einer Lage liegen, also keine Produkte übereinanderliegen, was gerade bei schlecht rollfähigen oder gar flachen Produkten, wie plattenförmigen, kissenförmigen Produkten, nicht automatisch erreicht werden kann.

In diesem Fall genügt jedoch häufig bereits ein Abstreifer, der in einer solchen Höhe über entweder dem Behälter-Band an der Stelle der stromabwärtigen Umlenkwalze oder auch stromabwärts davon über dem Transport-Band angeordnet wird, sodass die Höhe der Lücke zur Band-Oberseite darunter nur geringfügig größer ist als die Höhe eines Produktes, wodurch aufeinander liegende Produkte die Lücke nicht passieren können und ein oberes von zwei aufeinander liegenden Produkten zurückgehalten und vom unteren abgestreift wird.

Ein solcher Abstreifer kann jedoch manchmal nicht angewandt werden, beispielsweise, weil die Produkte so gestaltet sind, dass sie sich leicht gegenseitig verhaken und damit dem Auslass unter dem Abstreifer hindurch blockieren können, so dass dann ohne Abstreifer die Höhe der Schaltung im Behälter über die AuslaufWalze hinaus mittels der Feder-Steifigkeit auf das gewünschte Maß eingestellt werden muss.

Das erfindungs-wesentliche Element ist die Feder-Schlaufe:
Dabei ist die in Richtung Vergrößerung der Feder-Schlaufe vorhandene Federvorspannung hinsichtlich ihrer Federsteifigkeit so eingestellt, dass sie sich mit dem spezifischen Gewicht des Schüttgutes in der Behälter-Schlaufe die Waage hält.

Dadurch wird erreicht, dass mit zunehmender Leerung der Behälter-Schlaufe die vor Spannung der Feder-Umlenkungswalze entgegenwirkende Bandspannung abnimmt, und somit die Feder-Schlaufe größer und damit die Behälter-Schlaufe analog kleiner wird wegen der feststehenden Länge des Behälter-Bandes, welches aus diesem Grund gerade kein nennenswert dehnbares Band sein sollte.

Ferner sollte die Behälter-Bandeinheit außer der Feder-Schlaufe keine weitere Spanneinheit für das Behälterband aufweisen, denn die Feder-Schlaufe erfüllt diese Funktion der Bandspannung ohnehin.

Der Vorteil der gefederten Feder-Schlaufe; egal ob die Nachfüllung des Schüttgutes in der Behälter-Schlaufe stetig oder unregelmäßig, insbesondere chargenweise, erfolgt, besteht darin, dass sie sich mit ihrer Größe immer automatisch an das aufzunehmende Volumen in der Behälterschlaufe anpasst wegen der Feder-Vorspannung in der Feder-Schlaufe.

Selbst wenn die Feder-Umlenkwalze - trotz ihrer Namensgebung - nicht mittels einer Federkraft - egal ob es sich um eine mechanische, magnetische, pneumatische oder elektrische Feder handelt - beaufschlagt ist, sondern lediglich beweglich ist und mittels eines Federschlaufen-Antriebes aktiv bewegt wird, kann auf diese Art und Weise die Größe der Behälter-Schlaufe so gesteuert werden, dass im gewünschten Maß Produkte über die Auslauf-Umlenkwalze des Behälter-Bandes auf das Abtransportband gelangen. Allerdings ist der bauliche Steuerungs-Aufwand für eine solche gesteuert verlagerbare Feder-Umlenkwalze erheblich größer als für eine einfache Feder-Vorspannung der Feder-Umlenkwalze.

Vorzugsweise ist die Feder-Vorspannung auf die Feder-Umlenkwalze einstellbar durch sei Änderung der Feder-Steifigkeit, sodass beim Wechseln von einem Schüttgut auf ein anderes Schüttgut mit anderem spezifischen Gewicht des Schüttgutes die Feder-Vorspannung verändert werden kann - also bei höherem spezifischen Gewicht erhöht werden kann und umgekehrt - sodass wieder im gewünschten Maß Produkte aus der Behälter-Schlaufe auf das Abtransport-Band gelangen.

Unter spezifischem Gewicht des Schüttgutes wird dabei nicht das spezifische Gewicht der einzelnen Produkte verstanden, sondern das spezifische Gewicht einer losen Schüttung dieser Produkte, also einschließlich der Hohlräume zwischen den Produkten in der Schüttung.

Denn selbst bei gleichem spezifischen Gewicht des Materials der Produkte zweier Schüttungen verändert sich das spezifische Gewicht der Schüttung, beispielsweise wenn die Produkte im ersten Schüttgut Kugeln mit kleinem und im zweiten Schüttgut mit großem Durchmesser sind, da sich dadurch der Anteil des Volumens der Hohlräume in der Schüttung und somit das spezifische Gewicht der Schüttung ändert trotz gleichem spezifischen Gewicht der einzelnen Produkte.

Häufig ist es gewünscht, dass die Produkte innerhalb eines auf dem Abtransport-Band erzeugten, vorzugsweise einlagigen, Produkt-Teppichs zueinander einen bestimmten Mindest-Abstand aufweisen, beispielsweise um sie besser in einer Umsetz-Vorrichtung ergreifen zu können.

Der Abstand zwischen den einzelnen Produkten in Laufrichtung des Abtransport-Bandes lässt sich einstellen, indem die pro Zeiteinheit aus dem Behälter-Band auslaufenden Produkte entsprechend eingestellt wird.

Um auch einen gewünschten Mindest-Querabstand - also in Querrichtung zur Laufrichtung des Bandes - zu erzielen, kann eine Querspreiz-Vorrichtung vorhanden sein zum Beabstanden der Produkte in Querrichtung.

Dies kann beispielsweise dadurch erfolgen, dass Querspreiz-Körper im Bewegungsweg der Produkte oberhalb des Transport-Bandes angeordnet werden, die zwei eng benachbart ankommende Produkte auf einen größeren Quer-Abstand auseinanderschieben, indem die Querspreiz-Körper einen in Laufrichtung der Produkte und des Bandes zunehmenden, also keilförmigen, Querschnitt - in der Aufsicht betrachtet - besitzen.

Solche Querspreiz-Körper können beispielsweise in der Lücke unter dem Abstreifer oder auch stromabwärts davon vorhanden sein, vorzugsweise jedoch nicht erst im Verlauf des vorzugsweise immer gleich breiten Transport-Bandes, da hierdurch Produkte seitlich vom Abtransport-Band herabgedrängt werden könnten.

Vorzugsweise sind solche Vereinzelungs-Körper nicht an der gleichen Längs-Position in Laufrichtung des Bandes nebeneinander angeordnet, sondern beginnend mit einem Querspreiz-Körper in der Mitte des Bandes, die beidseits dazu folgenden Querspreiz-Körper jeweils in Laufrichtung des Bandes hierzu versetzt.

Bei Anordnung aller Querspreiz-Körper in der Lücke unter dem Abstreifer ist dies nicht möglich, sondern diese wären dann alle auf der gleichen Längs-Position, nämlich unter dem Abstreifer - der in der Regel lediglich eine dünne Platte ist - angeordnet, was die Gefahr von Verstopfungen einzelner der Kanäle zwischen den Abstreif-Körpern in sich birgt.

Dies könnte allerdings durch kurzes Rückwärtslaufen des Behälter-Bandes in aller Regel behoben werden.

Eine Querspreiz-Vorrichtung kann jedoch auch dadurch erfolgen, dass sich die Auflage, in der Regel das Förderband, auf dem sich der Produkt-Teppich befindet, in Querrichtung verbreitert und dadurch die Produkte des Produkt-Teppichs in Querrichtung auseinander bewegt werden.

Hierfür sind beispielsweise Ketten-Laufbänder bekannt, die an Stelle von Förderbändern mit einem einstückigen Bandmaterial verwendet werden können, und bei denen die Glieder der Förderkette in Querrichtung zusammen und auseinandergefahren werden können, sodass die Produkte vom Auslauf der Behälter-Schlaufe auf das Transport-Band im zusammen geschobenen Zustand eines solchen Gliederketten-Bandes und im weiteren Verlauf die Glieder des Gliederketten-Bandes in Querrichtung zunehmend beabstandet werden - was meist durch entsprechende Leitelemente an der Unterseite des Gliederketten-Bandes geschieht - und dadurch die aufliegenden Produkte von der Längsmitte aus in Querrichtung zunehmend nach außen verlagert werden, umso mehr, je weiter sie von der Längsmitte entfernt sind.

Falls Behälter-Band und Abtransport-Band unterschiedliche Bänder sind und kein einheitliches Band darstellen, ist eine Übergabe-Einheit dazwischen zur Übergabe der Produkte vom Behälter-Band auf das Transport-Band notwendig.

Dies kann im einfachsten Fall eine Fallstrecke sein, indem die Produkte vom Ende des Behälter-Bandes herabfallen auf den tieferliegenden Beginn des Abtransport-Bandes.

Falls jedoch eine körperlich ausgebildete Übergabe-Einheit vorhanden ist, kann diese zusätzlich als Querspreiz-Vorrichtung ausgebildet sein.

Eine Möglichkeit ist eine Produkt-Übergabe-Einheit in Form einer Rutsche, die so gestaltet ist, dass die Rutsche einerseits in der Seitenansicht zur Laufrichtung des Bandes betrachtet schräggestellt ist zur Laufrichtung, beispielsweise des Obertrums des nachfolgenden Abtransport-Bandes, aber andererseits in der Aufsicht betrachtet abseits der Längsmitte zusätzlich geneigt ist zur Querrichtung, und diese Neigung zur Querrichtung insbesondere mit zunehmendem Abstand von der Längsmitte zu den Seiten hin zunimmt.

Dadurch werden die nicht genau auf der Längsmitte über die Rutsche rutschenden Produkte beim Herabrutschen zusätzlich in Querrichtung abgelenkt und dadurch in Querrichtung gegenüber dem Abstand vor der Rutsche zunehmend beabstandet, was jedoch in aller Regel erfordert, dass das Abtransport-Band stromabwärts der Rutsche eine größere Breite besitzt als das Behälter-Band stromaufwärts der Rutsche.

Hinsichtlich des Verfahrens zum Vereinzeln eines Schüttgutes mit Hilfe einer Vereinzelungs-Bandeinheit wie vorstehend beschrieben, wird diese Aufgabe dadurch gelöst, dass die Größe einer nach oben offenen Behälter-Schlaufe für das Schüttgut durch Steuern der Querbewegung einer Feder-Umlenkwalze für das Behälter-Band quer zur Laufrichtung des, insbesondere endlosen, Behälter-Bandes an dieser Stelle so gesteuert wird, dass im gewünschten Maß Produkte aus der Behälter-Schlaufe über die stromabwärtige Behälter-Umlenkwalze des Behälter-Bandes, - die Auslauf-Walze - gelangen.

Das Transport-Trum, insbesondere das Obertrum eines stromabwärts der Behälter-Schlaufe angeordneten Abtransport-Bandes, wird gesteuert angetrieben, insbesondere dann, wenn Produkte aus der Behälter-Schlaufe auf das Transport-Trum gelangen.

Die Größe der Behälter-Schlaufe wird dadurch gesteuert, dass die Feder-Umlenkwalze der Feder-Schlaufe, die sich abseits der Behälter-Schlaufe, vorzugsweise im Rücklauf des endlosen Behälter-Bandes befindet, mittels Vorspannung in Richtung Vergrößerung der Feder-Schlaufe beaufschlagt ist und damit sich die Größe der Behälter-Schlaufe des Behälter-Bandes selbst steuert ohne aufwändige zusätzliche, insbesondere elektrische oder elektronische aktive Steuerung, wie sie bei einem aktiv gesteuerten Verlagerungs-Antrieb der Feder-Umlenkwalze notwendig wäre.

Um die Vereinzelungs-Bandeinheit auf ein Schüttgut mit einem anderen spezifischen Gewicht der Schüttung umzustellen, ist die Federsteifigkeit der auf die Feder-Umlenkwalze einwirkenden Feder vorzugsweise einstellbar auf das neue spezifische Gewicht der Schüttung.

Diese Einstellung der Federsteifigkeit kann sogar automatisch erfolgen, indem sie von einem einstellbaren Minimal-Wert aus nach Einfüllen einer ersten Charge des neuen Schüttgutes in die leere Behälter-Schlaufe bei umlaufendem Behälter-Band immer weiter erhöht wird, bis Produkte, vorzugsweise im gewünschten Maß, über die Auslauf-Walze der Behälter-Schlaufe gelangen.

### c) Ausführungsbeispiele

Ausführungsformen gemäß der Erfindung sind im Folgenden beispielhaft näher beschrieben. Es zeigen:
- **Figuren 1a, b:**: eine Vereinzelungs-Bandeinheit, bei der das Behälter-Band identisch mit dem Abtransport-Band für die Produkte einer nachgelagerten Verpackungsstraße ist, in Seitenansicht und Aufsicht,
- **Figuren 2a, b:**: eine Vereinzelungs-Bandeinheit, bei der die Behälter-Bandeinheit ein endloses Behälter-Band aufweist und getrennt ist von der Abtransport-Bandeinheit und dazwischen die Produkte übergeben werden mittels einer Übergabe-Einheit, in Seitenansicht und Aufsicht
- **Figuren 3:**: eine Vereinzelungs-Bandeinheit, bei die Übergabe-Einheit zwischen der Behälter-Bandeinheit und der Abtransport-Bandeinheit als Spreizband ausgebildet ist,
- **Figur 4:**: eine Vereinzelungs-Bandeinheit in Seitenansicht, bei der die Behälter-Bandeinheit ein endliches Behälter-Band aufweist und getrennt ist von der Abtransport-Bandeinheit und dazwischen die Produkte übergeben werden mittels einer Übergabe-Einheit.

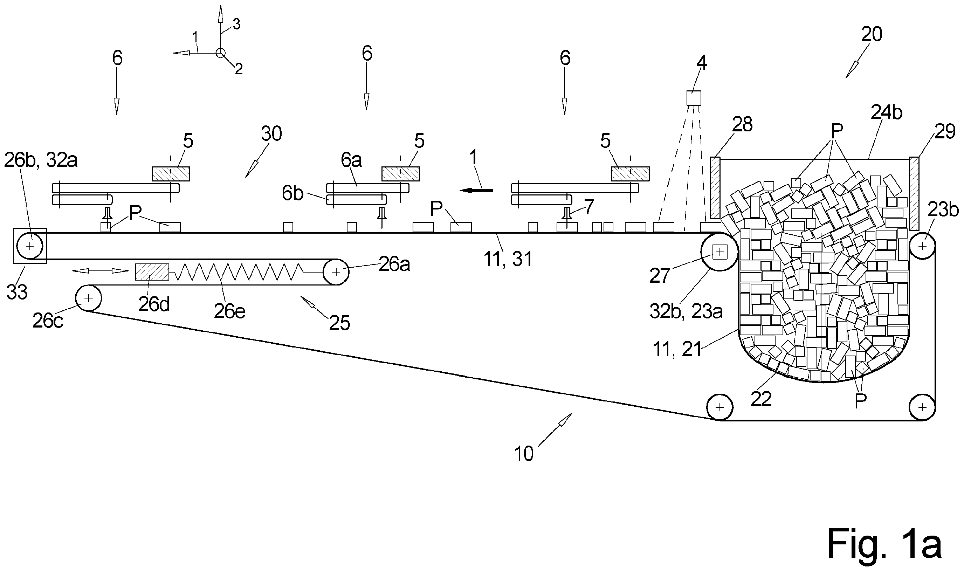

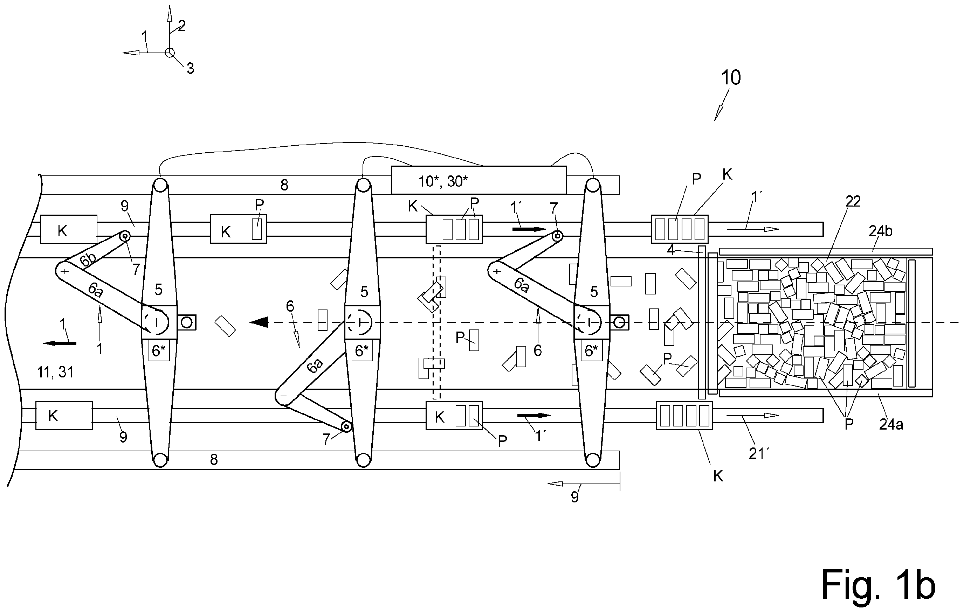

Wie die **Figuren 1a**, **b** zeigen, werden Produkte **P**, die kontinuierlich oder chargenweise als Schüttgut zugeliefert werden, von einer Verpackungsstraße, in diesem Fall einer Picker-Straße oder Roboter-Straße, von einem Abtransport-Band **31** - dem Produktband, auf dem sie liegen - mittels einer Reihe in Laufrichtung **10** dieses Abtransport-Bandes **31** hintereinander an einem Grundgestell **8** angeordneten Robotern **6** in einem Umsetzbereich **9** ergriffen und umgesetzt in Umverpackungen, in diesem Fall in Form von Kartons **K**, die beidseits des ProduktBandes **31** in Gegenrichtung **1'** zu dessen Durchlauf-Richtung **1** entlang bewegt werden, was jedoch für die vorliegende Erfindung unwesentlich ist.

Die Roboter **6** bestehen aus einem um eine Roboter-Basis **5** in Form einer Quertraverse oberhalb des Produktbandes **31** um eine aufrechte Achse verschwenkbaren Oberarm **6a**, gegenüber dem ein Unterarm **6b** wiederum um eine aufrechte Schwenkachse verschwenkbar ist und an dessen freien Ende sich ein Werkzeug, meist ein Greifer oder Picker **7**, befindet, der absenkbar bis auf das Produkt-Band **31** bzw. die Kartons **K** ist und dazwischen angehoben werden kann zum Umsetzen eines an diesem Werkzeug **7** gehaltenen Produktes **P**.

Die Roboter **6** sind gesteuert von Onboard-Steuerungen **6*** als auch einer zentralen Abtransport-Steuerung **30***, die an die Roboter **6** auch die Position und ggfs. Drehlage aller Produkte **P** auf dem Abtransport-Band **31** mitteilt, die vor Beginn des Umsetz-Bereiches, also der mit Robotern **6** besetzten Strecke, ermittelt wird mittels eines oberhalb des Abtransport-Bandes **31** quer über dessen Breite verlaufendem Scanner **4**, der ebenfalls signaltechnisch mit einer zentralen Abtransport-Steuerung 30* verbunden ist wie auch alle Roboter **6**.

Für das Ergreifen und Umsetzen der einzelnen Produkte **P** durch die Roboter **6** müssen diese Produkte **P** zunächst aus dem Schüttgut heraus vereinzelt werden mittels einer Vereinzelungs-Bandeinheit **10,** weshalb das endlose Abtransport-Band **31** stromaufwärts als endloses Behälter-Band fungiert, indem es stromaufwärts der Umsetzstrecke zwischen zwei Behälter-Umlenkwalzen **23a**, **23b** durchhängt und eine Behälter-Schlaufe **22** bildet, indem die Produkte **P** einzeln oder chargenweise eingeworfen werden und gepuffert werden vor dem Vereinzeln, wobei beidseits dieser Behälter-Schlaufe **22** nah anliegend vertikal aufragende Seitenwände **24a, b** angeordnet sind, sodass dadurch ein nur oben offener Behälter entsteht.

Somit wird wegen nur eines einzigen vorhandenen Bandes, des Vereinzelungs-Bandes **11,** auch nur ein einziger Motor als Abtransport-Antrieb **33** benötigt.

Nach hinten, also zum stromaufwärtigen Ende hin, kann die dortige Behälter-Umlenkwalze **23b** höher positioniert sein als die Auslauf-Umlenkwalze **23a** oder es schließt sich an diese stromaufwärtige Behälter-Umlenkwalze **23b** nach oben eine aufrecht stehende Rückwand **29** an, die sich über die Breite des Behälter-Bandes **21** hinweg erstreckt und sich unmittelbar an die Behälter-Umlenkwalze **23b** nach oben hin anschließt.

Durch Anheben des Bodens der Behälter-Schlaufe **22** wird erreicht, dass das darin gelagerte Schüttgut bis auf eine Höhe oberhalb der stromabwärtigen Umlenkwalze **23a,** die also den Übergang dieses Behälter-Bandes **21** im Bereich der Behälter-Schlaufe **22** in das einstückig damit ausgebildete Transport-Band **31** darstellt und auch Auslaufwalze **23a** genannt wird, erreicht und etwas übersteigt, sodass bei Antreiben des Abtransport-Bandes **31** in Laufrichtung **1** von der Behälter-Schlaufe **22** weg Produkte **P** auf das Abtransport-Band **31** im Bereich dieser Auslaufwalze **23a** gelangen und einen Produkt-Teppich auf dem Transport-Band **31** bilden.

Damit die Produkte nur in einer Lage und nicht übereinanderliegend auf das Abtransport-Band **31** gelangen, ist oberhalb des Transport-Bandes **31,** vorzugsweise an der Axialposition der Auslaufwalze **23a,** ein Abstreifer **28** in Form einer in Querrichtung **2** sich über das Abtransport-Band **31** hinweg erstreckenden Riegels vorhanden, das in einem Abstand **A** oberhalb des Transport-Bandes **31** endet, die nur geringfügig größer ist als die Höhe eines darauf liegenden Produktes **P** und geringer als die Höhe zweier aufeinander liegender Produkte **P**.

Bei Produkten, die in einer Erstreckungsrichtung deutlich größer sind als in den anderen Erstreckungsrichtungen, ist der Abstand **A** auch geringer als die größte Erstreckung der Produkte **P,** wobei davon ausgegangen wird, dass nur gleiche Produkte **P** das Schüttgut in der Behälter-Schlaufe **22** bilden. Handelt es sich hierbei um zwei oder mehr Sorten von Produkten **P** mit unterschiedlichen Abmessungen, so gilt die vorstehende Aussage immer für die Abmessungen des größten dieser Produkte.

Um einen etwa gleichmäßigen Produkt-Teppich auf dem Transport-Band **31** zu erzeugen, muss der Boden der Behälter-Schlaufe **22** fortlaufend so angehoben werden, dass der Füllstand der Schüttung in der Behälter-Schlaufe immer höher liegt als die Oberseite der Auslauf-Walze **23a** und des sich daran anschließenden Abtransport-Bandes **31**, auch wenn periodisch oder regelmäßig neue Produkte **P** in die Behälter-Schlaufe **22** gefüllt werden.

Dies wird hier erfindungsgemäß erreicht, indem das zu einem endlosen Vereinzelungs-Band **11** vereinte endlose Behälter-Band **21** und endlose Abtransport-Band **31** in dem Rücklauf-Trum vom stromabwärtigen Ende des Abtransport-Bandes **31** eine Feder-Schlaufe **25** bildet:
Dabei ist eine Feder-Umlenkwalze **26a** mittels Federkraft vorgespannt quer zur dortigen Laufrichtung des Vereinzelungs-Bandes **11,** angeordnet zwischen zwei benachbarten Gegenhalter-Umlenkwalzen **26b**, **c**, wovon in diesem Fall die eine, die Gegenhalter-Umlenkwalze **26b,** gleichzeitig die stromabwärtige Abtransport-Umlenkwalze **32a** des Abtransport-Band-Abschnittes **31** ist, während die andere Abtransport-Umlenkwalze **32b** gleichzeitig die Auslaufwalze **23a** des Behälter-Band-Abschnittes **21** ist.

Die Feder **26e,** mit der die Feder-Umlenkwalze **26a** in Richtung Vergrößerung der Feder-Schlaufe **25** vorgespannt ist, ist in den **Figuren 1a****,** **b** eine Druckfeder insbesondere in Form einer z.B. Spiralfeder und bewirkt, dass die Schüttung in der Behälter-Schlaufe **22** immer oberhalb der Oberseite der Auslaufwalze **23a** und des darüber geführten Behälter-Bandes **21** bleibt, indem bei zunehmender Leerung durch Produkt-Auslauf das Gewicht in der Behälter-Schlaufe **22** geringer wird und damit der Druck auf die Feder **26e** die Feder-Umlenkwalze **26a** somit weiter in Richtung Vergrößerung der Feder-Schlaufe **25** bewegt, was ein Hochheben des Bodens der Behälter-Schlaufe **22** bewirkt.

Wird - beispielsweise eine ganze Charge - von zusätzlichen Produkten **P** in die Behälter-Schlaufe **22** eingebracht, vergrößert dies das Gewicht in der Behälter-Schlaufe **22** und die Feder **26e** wird weiter zusammengedrückt und dadurch der Boden der Behälter-Schlaufe **22** nach unten abgesenkt, sodass das Niveau der Oberseite der Schüttung in der Behälter-Schlaufe **22** in etwa gleichbleibt.

Die Federsteifigkeit der Feder **26e** muss dabei auf das spezifische Gewicht der Schüttung - nicht des einzelnen Produktes **P** - in der Behälter-Schlaufe **22** abgestimmt sein, weshalb die Feder-Abstützung **26d,** an der sich das der Feder-Umlenkwalze **26a** gegenüberliegende Ende der Druck-Feder **26e** abstützt, in Erstreckungsrichtung der Feder **26e** verstellen lässt, eine Verstellung jedoch nur notwendig wird, wenn der Wechsel von einer Schüttung auf eine andere mit anderem spezifischen Gewicht - meist bewirkt durch andere Abmessungen oder anderes spezifisches Gewicht der einzelnen Produkte der beiden Schüttungen - vorgenommen wird.

Diese Einstellung kann auch automatisch erfolgen, indem ein Höhensensor die maximal gewünschte Schütthöhe im Behälter überwacht und bei Erreichen der Schütthöhe die Federvorspannung reduziert, insbesondere das Widerlager der Feder von der Feder-Umlenkwalze weiter entfernt, bis die maximal zulässige Schütthöhe wieder unterschritten ist.

Dies ist auch als rein mechanische Lösung möglich, indem als mechanischer Höhensensor eine höhenbewegliche beispielsweise Klappe vorhanden ist, die von der Schüttung darunter kontaktiert und hochgehoben werden kann und mechanisch im vorbeschriebenen Sinn mit der Feder-Abstützung **26a** der Feder gekoppelt ist.

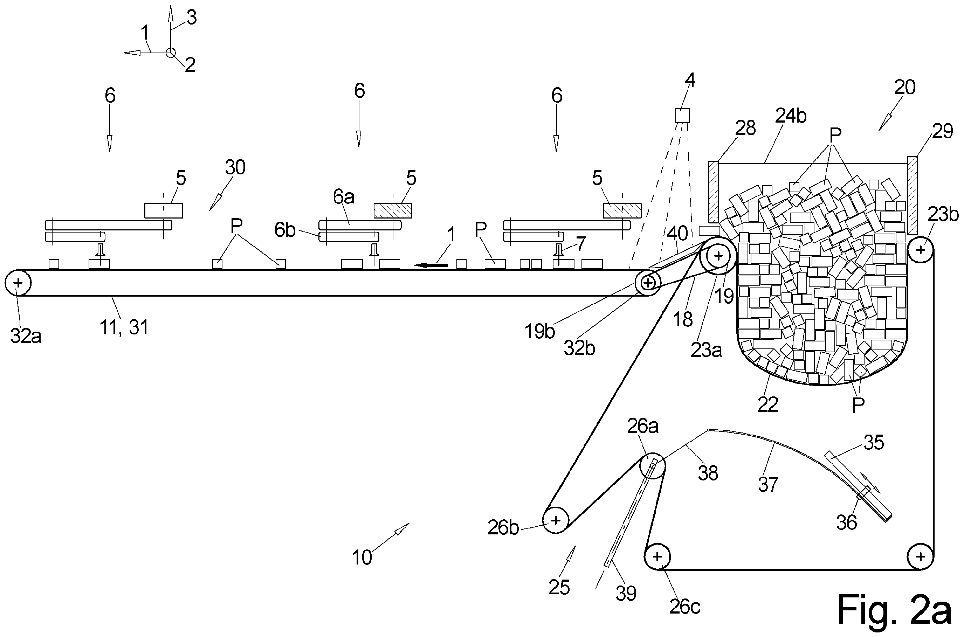

Eine andere Bauform der Feder **26e** zeigt **Figur 2a****:**
Dort ist diese Feder **26e** zum einen eine Zugfeder und zum anderen in der Form einer Blattfeder 37.

Das erste Ende der Blattfeder 37 ist an oder in der Nähe eines Fixier-Balkens 35 so befestigt, dass dieser erste Endbereich der Blattfeder 37 entlang der Haupterstreckung-Richtung des Fixier-Balkens 35 verläuft. Mittels einer Fixier-Spange 36, die den Fixier-Balkens 35 und die Blattfeder 37 eng umschließt und entlang des Fixier-Balkens 35, insbesondere selbsthemmend, verschiebbar ist kann die Länge der Parallel-Strecke verändert werden, über die die Blattfeder 37 von ihrem ersten Ende ab gemessen nahe an, insbesondere parallel zum, Fixier-Balken 35 verläuft.

Da das andere Ende der Blattfeder 37 unter Zug steht und über ein Zugelement 38 verbunden ist mit der Feder-Walze 26a der Feder-Schlaufe 25, wird die auf diese Feder-Walze 26a ausgeübte Zugkraft vergrößert, je weiter die Fixier-Spange 36 vom ersten Ende des Fixier-Balkens 35 und damit der Blattfeder 37 Weg verschoben wird, da hierdurch der für die Biegung der Blattfeder 37 verbleibende Längenbereich verkürzt wird und deren Federsteifigkeit vergrößert wird.

Die Feder-Walze 26a ist in Richtung einer Führung 39 mit ihren stirnseitigen Achszapfen geführt, wobei die Führung 39 in Tiefenrichtung der Feder-Schlaufe 25 verläuft.

Abhängig von dem als Werkzeug **7** verwendetem Greifer **7** kann es notwendig sein, dass die Produkte **P** nicht nur in einer einzigen Lage nebeneinander als Produkt-Teppich auf dem Produkt-Band **31** liegen, sondern - wenn das Werkzeug beispielsweise ein seitlich an den Produkten angreifender Greifer **7** und kein von oben ansaugender Sauger ist - ausreichende Abstände zwischen den einzelnen Produkten **P** in der horizontalen Richtung vorhanden sein müssen.

Dann ist zusätzlich eine Beabstandung der Produkte **P,** die vom Behälter-Band **21** auf das Transport-Band **31** gelangen, notwendig in Form einer Querspreiz-Einrichtung **50**.

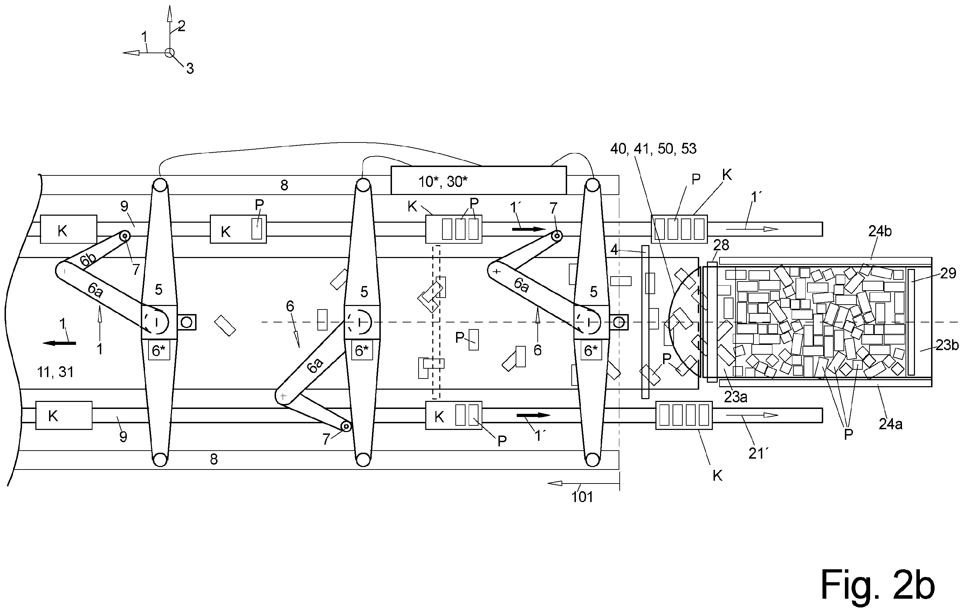

Zu diesem Zweck - oder auch um die Vereinzelungs-Steuerung **10*** sowie die Abtransport-Steuerung **30*** voneinander zu entkoppeln - kann es sinnvoll sein, Behälter-Band **21** und Transport-Band **31** als separate, jeweils endlose und umlaufende Bänder auszubilden, wie in den **Figuren 2a****,** **b** dargestellt, und eine Produkt-Übergabe-Vorrichtung **40** dazwischen vorzusehen.

Dann sind die stromaufwärtige Abtransport-Umlenkwalze **32b** und die stromabwärtige Behälter-Umlenkwalze **23a** nicht identisch, sondern in Laufrichtung des Bandes beabstandet und vorzugsweise auch nicht auf der gleichen Höhe mit ihren Oberseiten angeordnet, sodass die Übergabe-Vorrichtung **40,** beispielsweise eine Rutsche **41,** von der Auslaufwalze **23a** aus auf das stromabwärtig angeordnete Abtransport-Band **31** hin nach unten geneigt ist, sodass die Produkte schwerkraftbedingt nach unten auf das Transport-Band **31** rutschen.

Die Feder-Schlaufe **25** ist dann Bestandteil der Behälter-Bandeinheit **21** und im Umlauf von dessen Behälter-Band **21** angeordnet.

Der Vorteil einer solchen Transport-Übergabe-Einheit **40** besteht darin, dass diese gleichzeitig als Querspreiz-Vorrichtung **50** zum Beabstanden der Produkte in Querrichtung **2** ausgestaltet werden kann.

So kann im vorliegenden Fall die als Produkt-Übergabe-Einheit **40** dienende Rutsche **41** als Spreiz-Rutsche **51** ausgebildet sein, indem sie nicht nur eine Neigung in Laufrichtung **1** besitzt, sondern auch eine Neigung in Querrichtung **2**, wobei diese Neigung in Querrichtung **2** auf der Längsmitte des Abtransport-Bandes **31** vorzugsweise noch nicht vorhanden ist und in Querrichtung **2** zu beiden Rändern des Abtransport-Bandes **31** hin zunimmt.

Wie dargestellt, gelangen die am Auslauf des Behälter-Bandes noch eng benachbarten Produkte unter einem größeren Querabstand in Querrichtung **2** auf das Abtransport-Band **31**, wofür das Abtransport-Band **31** in aller Regel auch breiter als das Behälter-Band **21** sein muss.

Die Produkt-Übergabe-Einheit **40** kann - vor allem bei auf gleicher Höhe liegenden Oberseiten ihre benachbarten Umlenkwalzen von Transport-Bandeinheit **30** und Behälter-Bandeinheit **20** - auch ein Förderband sein, das als sogenanntes Spreizband ausgebildet ist, welches an seinem Obertrum eine in seiner Laufrichtung zunehmende Breite besitzt.

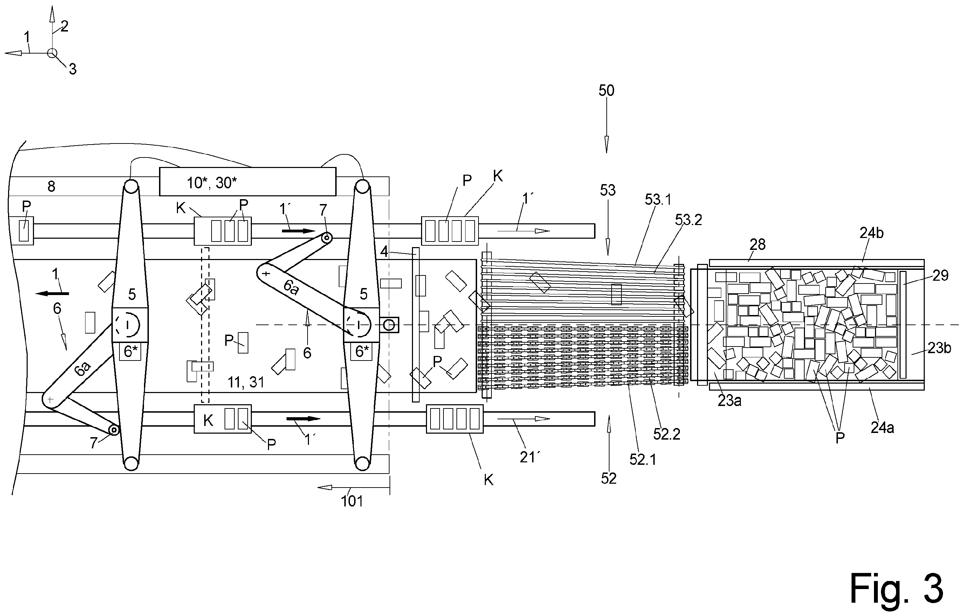

Dies ist wie in **Figur 3** dargestellt möglich, indem dieses Spreizband **53** z.B. aus nebeneinanderliegenden endlos umlaufenden Spreizband-Riemen **53.1**, **53.2** besteht, oder aus einem Gliederketten-Band **52**, dessen Kettenglieder **52.1**, **52.2** durch entsprechende unterseitig am Obertrum angeordnete Leitelemente von einer eng benachbarten Lage in Querrichtung zu einer beabstandeten Lage in Querrichtung entlang der Laufrichtung verstellt werden können.

Um die Behälter-Bandeinheit **20** und die Transport-Bandeinheit **30** unabhängig voneinander steuern zu können - was die Flexibilität der gesamten Vereinzelungs-Bandeinheit und der integrierten Verpackungsstraße erhöhen kann - sind für die beiden Bandeinheiten unterschiedliche Antriebe, also ein Transport-Antrieb **33** einerseits und ein Behälter-Antrieb **27** andererseits notwendig, was den baulichen Aufwand vergrößert.

Sofern dies nicht gewünscht ist, können beide Bandeinheiten von ein und demselben Antriebsmotor aus angetrieben werden, indem jeweils eine der Umlenkwalzen mittels daran befestigter Ritzel **19a, b** von der Transport-Bandeinheit **30** einerseits und des Behälter-Bandes **21** andererseits und gegebenenfalls auch des Spreiz-Bandes hinsichtlich ihrer Rotation gekoppelt sind, beispielsweise mit einem Zahnriemen **18**, der über die beiden Ritzel **19a, b** umläuft.

Gegebenenfalls kann dabei auch eine Übersetzung dazwischen erfolgen entsprechend z.B. einem eventuell vorhandenen Durchmesser-Unterschied dieser beiden Walzen, sodass z.B. das Behälter-Band **21** und das Abtransport-Band **31** andererseits entweder mit der gleichen Geschwindigkeit laufen oder in einem festen Geschwindigkeits-Verhältnis zueinander laufen, aber nur ein Antriebs-Motor benötigt wird, wie in **Figur 2a** dargestellt.

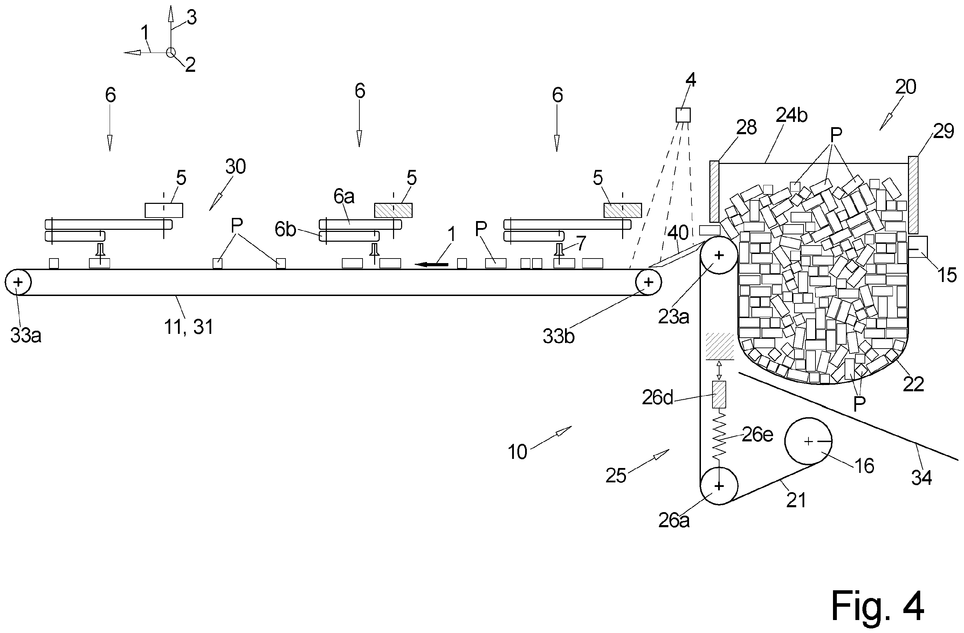

**Figur 4** zeigt, nur in der Seitenansicht, ferner eine Vereinzelungs-Bandeinheit **10**, bei der die Behälter-Bandeinheit **20** von der Abtransport-Bandeinheit **30** jeweils über getrennte Bänder **21, 31** verfügen, jedoch im Gegensatz zu den **Figuren 2a****,** **b** das Behälter-Band **21** ein endliches Band ist.

Dabei befindet sich die eine Endbefestigung **15** des Behälter-Bandes **21** am hinteren Ende der Behälter-Schlaufe **22**, in diesem Fall unter der Rückwand **29**, falls eine solche vorhanden ist, und das andere Ende des Behälter-Bandes **21** ist auf einer Wickelwalze **16** befestigt und kann durch Antreiben dieser Wickelwalze **16** aufgewickelt und abgewickelt werden.

Die Wickelwalze **16** befindet sich bezüglich der Endbefestigung **15** auf der anderen Seite der Behälter-Schlaufe **22**.

Somit kann durch Aufwickeln auf der Wickelwalze **16** die Größe der Behälter-Schlaufe **22** verringert werden und umgekehrt durch Abwickeln vergrößert werden.

Zwischen der Auslaufwalze **23a,** und der Wickelwalze **16** befindet sich die Feder-Schlaufe **25**, die ansonsten ausgebildet ist wie in den **Figuren 1a****,** **b****,** wobei als Gegenhalter-Umlenkwalzen die Auslaufwalze **23a** einerseits und die Wickelwalze **16** andererseits dienen, jedoch auch separate Gegenhalter-Umlenkungswalzen vorhanden sein könnten.

Zusätzlich ist in **Figur 4** optional unter der Behälter-Schlaufe **22** eine Behälter-Führung **34** aus einer durchgehenden Platte oder sich mehreren aneinander anschließenden Platten, die auf ihrer Oberseite eine Gleitfläche für die Behälterschlafe 22 bilden, vorgesehen.

Diese Behälter-Führung 34 erstreckt sich von dort schräg nach unten in oder entgegen der Laufrichtung des Behälter-Bandes, entweder unter das Abtransportband **31** hinein oder von dort weg, so dass bei Vergrößerung der Behälter-Schlaufe **22** sich diese nicht nur vertikal nach unten ausdehnen kann, sondern schräg zur Seite, was der Verringerung der Bauhöhe der gesamten Vorrichtung dient.

Ansonsten ist die Funktion der Vereinzelungs-Bandeinheit **10** die gleiche wie in den **Figuren 2a****,** **b** beschrieben.

### BEZUGSZEICHENLISTE

- 1: Laufrichtung
- 1': Gegenrichtung
- 2: Querrichtung
- 3: Vertikale
- 4: Scanner
- 5: Roboter-Basis
- 6: Roboter
- 6*: Steuerung
- 6a: Oberarm
- 6b: Unterarm
- 7: Picker, Greifer
- 8: Grundgestell
- 9: Umsetzbereich
- 10: Vereinzelungs-Bandeinheit
- 10*: Vereinzelungs-Steuerung
- 11: Vereinzelungs-Band
- 15: Endbefestigung
- 16: Wickelrolle
- 17: Vereinzelungs-Antrieb
- 18: Antriebskopplung, Zahnriemen
- 19a, b: Ritzel
- 20: Behälter-Bandeinheit
- 20*: Behälter-Steuerung
- 21: Behälterband
- 22: Behälter-Schlaufe
- 23a: Behälter-Umlenkwalze, Auslaufwalze
- 23b: Behälter-Umlenkwalze
- 24a, b: Seitenwand
- 25: Feder-Schlaufe
- 26a: Feder-Umlenkwalze
- 26b, c: Gegenhalter-Umlenkwalze
- 26d: Feder-Stütze, Feder-Abstützung
- 26e: Feder
- 27: Behälter-Antrieb
- 28: Abstreifer
- 29: Rückwand
- 30: Abtransport-Bandeinheit
- 30*: Abtransport-Steuerung
- 31: Abtransportband
- 31a: Obertrum
- 32a, b: Abtransport-Umlenkwalzen
- 33: Abtransport-Antrieb
- 34: Behälter-Führung
- 35: Fixier-Balken
- 36: Fixier-Spange
- 37: Blattfeder
- 38: Zugelement
- 39: Führung
- 40: Produkt-Übergabeeinheit
- 41: Rutsche

- 50: Querspreiz-Vorrichtung
- 51: Querspreiz-Rutsche
- 52: Gliederkettenband
- 52.1, 52.2: Kettenglied
- 53: Spreizband
- 53.1, 53.2: Spreizband-Riemen
- A: Abstand
- K: Karton
- P: Produkt

## Patentansprüche

1. **Vereinzelungs-Bandeinheit** (10) zum Vereinzeln von Produkten (P), mit
a) einer Behälter-Bandeinheit (20) umfassend
- ein Behälterband (21),
- wenigstens eine fix positionierte Behälter-Umlenkwalze (23a), über die das Behälterband (21) läuft und stromaufwärts davon durchhängt zur Bildung einer oben offenen Behälter-Schlaufe (22) zum Bevorraten von Produkten (P),
- einen Behälter-Antrieb (27) zum Bewegen des Behälterbandes (21) über die Behälter-Umlenkwalze (23a),
- einer Behälter-Steuerung (20*) zur Steuerung der Größe der Behälter-Schlaufe (22),
b) einer Abtransport-Bandeinheit (30) stromabwärts der Behälter-Schlaufe (22) zum Abtransport der über die Behälter-Umlenkwalze (23a) aus der Behälter-Schlaufe (22) gelangenden Produkte (P), umfassend
- ein Abtransportband (31),
- einen Abtransport-Antrieb (33) für das Abtransportband (31) zum Bewegen wenigstens einer der Umlenkwalzen (32a) der Abtransport-Bandeinheit (30),
- einer Abtransport-Steuerung (30*) zur Steuerung des Abtransport-Antriebes (33),
**dadurch gekennzeichnet, dass**
- die Behälter-Bandeinheit (20) eine Feder-Schlaufe (25) aufweist mit einer in Richtung Vergrößerung oder Verkleinerung der Feder-Schlaufe (25) beweglichen, gefedert vorgespannten, Feder-Umlenkwalze (26a) und dass
- die Behälter-Bandeinheit (20) zwei Seitenwände (24a, b), die die Seiten der Behälter-Schlaufe (22) verschließen, umfasst.

2. Vereinzelungs-Bandeinheit nach Anspruch 1,
**dadurch gekennzeichnet, dass**
- die Vorspannung auf der vorgespannten, insbesondere gefedert vorgespannten. Feder-Umlenkwalze (26a) variabel ist,
- insbesondere dem die Federsteifigkeit der die Feder-Umlenkwalze (26a) vorspannenden Feder (26e) einstellbar ist, insbesondere automatisch einstellbar ist.

3. Vereinzelungs-Bandeinheit nach einem der vorhergehenden Ansprüche,
**dadurch gekennzeichnet, dass**
- der Behälter-Antrieb (27) und der Abtransport-Antrieb (33) funktionsvereinigt sind und gemeinsam nur einen Antriebsmotor aufweisen,
- insbesondere die Behälter-Steuerung (20*) und die Abtransport-Steuerung (30*) in einer, insbesondere einzigen, Vereinzelungs-Steuerung (10*) zusammengefasst sind.

4. Vereinzelungs-Bandeinheit nach einem der vorhergehenden Ansprüche,
**dadurch gekennzeichnet, dass**
- das Behälterband (21) ein endliches Behälterband (21) ist,
- welches an wenigstens einem Ende auf dem Umfang einer Wickelwalze (16) fixiert und auf dieser aufwickelbar ist und am anderen Ende fixiert ist, insbesondere am anderen Ende nur fixiert ist,
- der Behälter-Antrieb (27) die wenigstens eine Wickelwalze (16) antreibt.

5. Vereinzelungs-Bandeinheit nach einem der Ansprüche 1 - 2,
**dadurch gekennzeichnet, dass**
- das Behälterband (21) ein endloses Behälterband (21) ist, das über zwei horizontal beabstandete Behälter-Umlenkwalzen (23a, b) umläuft.

6. Vereinzelungs-Bandeinheit nach einem der vorhergehenden Ansprüche,
**dadurch gekennzeichnet, dass**
die Feder-Umlenkwalze (26a)
- entweder zwischen einer Gegenhalter-Umlenkwalze (26b) und einer Wickelwalze angeordnet ist, insbesondere falls das Behälterband (21) endlich ist,
- oder zwischen zwei Gegenhalter-Umlenkwalzen (26b, c), insbesondere falls das Behälterband (21) endlos ist.

7. Vereinzelungs-Bandeinheit nach einem der vorhergehenden Ansprüche,
**dadurch gekennzeichnet, dass**
das Abtransportband (31), ein endloses, Abtransportband (31) ist.

8. Vereinzelungs-Bandeinheit nach Anspruch 7,
**dadurch gekennzeichnet, dass**
die Abtransport-Bandeinheit (30)
- zwei horizontal beanstandete, fix positionierte Abtransport-Umlenkwalzen (32a, b) aufweist, über die das Abtransport-Band (31) für die Produkte (P) läuft und dazwischen mit einem im Wesentlichen horizontal verlaufenden Obertrum (31a) als Transporttrum für die darauf aufliegenden Produkte (P),
- der Abtransport-Antrieb (33) wenigstens eine der Umlenkwalzen (32a, b) antreibt.

9. Vereinzelungs-Bandeinheit nach einem der Ansprüche 1 - 8,
**dadurch gekennzeichnet, dass**
- entweder das Behälterband (21) und das Abtransportband (31) funktionsvereinigt und einstückig miteinander ausgebildet sind als Vereinzelungs-Band (11),
- insbesondere das Vereinzelungs-Band (11) ein endloses Vereinzelungs-Band (11) ist,
oder zwischen der Behälter-Bandeinheit (20) und der Transport-Bandeinheit (30) eine Produkt-Übergabeeinheit (40) vorhanden ist, insbesondere eine Fallstrecke oder eine Rutsche (41).

10. Vereinzelungs-Bandeinheit nach Anspruch 9,
**dadurch gekennzeichnet, dass**
- der Behälter-Antrieb (27) und der Abtransport-Antrieb (33) funktionsvereinigt sind und gemeinsam nur einen Antriebsmotor aufweisen,
- die Behälter-Steuerung (20*) und die Abtransport-Steuerung (30*) in einer Vereinzelungs-Steuerung (10*) zusammengefasst sind.

11. Vereinzelungs-Bandeinheit nach einem der vorhergehenden Ansprüche,
**dadurch gekennzeichnet, dass**
- eine Querspreiz-Vorrichtung (50) vorhanden ist zum Beabstanden der auf das Abtransportband (31) gelangenden oder auf dem Abtransportband (31) liegenden Produkte (P) in Querrichtung (2),
insbesondere die Querspreiz-Vorrichtung (50)
- eine nicht nur in Laufrichtung (1), sondern auch in Querrichtung (2) geneigte Querspreiz-Rutsche (51) zwischen Behälter-Band (21) und Abtransport-Band (31) ist,
- oder ein spreizbares Band, insbesondere Spreizband (53), insbesondere in Form von in ihrem Quer-Abstand veränderbaren Riemen (53.1, 53.2, 53.3) als Band oder abstandsveränderbaren Kettengliedern (32.1, 32.2) eines Gliederkettenbandes (32) als Band.

12. Vereinzelungs-Bandeinheit nach einem der vorhergehenden Ansprüche,
**dadurch gekennzeichnet, dass**
- die Behälter-Bandeinheit (20) zumindest am Auslauf einen Abstreifer (28) im Abstand (A) über der stromabwärtigen Behälter-Umlenkwalze (23a), der Auslauf-Walze (23a), aufweist,
und/oder
- die stromaufwärtige Behälter-Umlenkwalze (23b) entweder höher angeordnet ist als die stromabwärtigen Behälter-Umlenkwalze (23a) oder sich von der stromaufwärtige Behälter-Umlenkwalze (23b) eine Rückwand (29) zwischen den Seitenwänden nach oben erstreckt.

13. **Verfahren zum Vereinzeln** eines Schüttgutes aus Produkten (P) mit Hilfe wenigstens einer Vereinzelungs-Bandeinheit (10) nach einem der vorhergehenden Ansprüche,
wobei
- die Größe der nach oben offenen Behälter-Schlaufe (22) des Behälter-Bandes (21) so gesteuert wird, dass im gewünschten Maß, insbesondere laufend, in der Behälter-Schlaufe (22) vorhandene Produkte (P) über die stromabwärtige Behälter-Umlenkwalze (23a) der Behälter-Schlaufe (22) gelangen,
- das Transporttrum, insbesondere das Obertrum (31a), des stromabwärts der Behälter-Schlaufe (22) angeordneten Abtransportbandes (31) gesteuert angetrieben wird, insbesondere, wenn Produkte (P) aus der Behälterschlaufe (22) über die stromabwärtige Behälter-Umlenkwalze (23a), der Auslauf-Walze, auf das Transporttrum (31a) gelangen,
- die Größe der Behälter-Schlaufe (22) dadurch gesteuert wird, dass die Feder-Umlenkwalze (26a) der Feder-Schlaufe (25), die sich abseits der Behälter-Schlaufe (22), vorzugsweise im Rücklauf des endlosen Behälter-Bandes (21), befindet, mittels Vorspannung in Richtung Vergrößerung der Feder-Schlaufe (25) beaufschlagt wird.

14. Verfahren nach Anspruch 13,
**dadurch gekennzeichnet, dass**
die Federsteifigkeit der Feder (26e) abhängig vom spezifischen Gewicht der Schüttung
- entweder manuell eingestellt wird
- oder nach Einfüllen einer ersten Charge des neuen Schüttgutes in die leere Behälter-Schlaufe (22) die Federsteifigkeit der Feder (26e) von einem - insbesondere einstellbaren - Minimal-Wert aus bei umlaufendem Behälter-Band (21) immer weiter erhöht wird, bis Produkte, vorzugsweise im gewünschten Maß, über die Behälter-Umlenkwalze (23a), der Behälter-Schlaufe (22) gelangen
- oder mittels eines Höhen-Sensors die Höhe der Schüttung im Behälter auf der Höhe einer maximal zulässigen Schütthöhe überwacht wird und bei Erreichen der maximalen Schütthöhe mittels des Sensors die Federsteifigkeit der Feder (26e) reduziert wird, bis die maximale Schütthöhe wieder unterschritten ist.

## Claims

1. Singling belt unit (10) for separating products (P) from each other, with
a) a container belt unit (20) comprising
- a container belt (21),
- at least one fixedly positioned container deflecting roller (23a) over which the container belt (21) passes and sags upstream thereof to form an open-topped container loop (22) for storing products (P),
- a container drive (27) for moving the container band (21) over the container deflecting roller (23a),
- a container control (20*) to control the size of the container loop (22),
b) a removal belt unit (30) downstream of the container loop (22) for removing the products (P) coming out of the container loop (22) via the container deflecting roller (23a), comprising
- a removal conveyor (31),
- a removal drive (33) for the removal belt (31) for moving at least one of the deflecting rollers (32a) of the removal belt unit (30),
- a removal control (30*) for controlling the removal drive (33),
**characterized in that**
- the container belt unit (20) has a spring loop (25) with a spring-loaded deflecting roller (26a) which is movable in the direction of increasing or decreasing the size of the spring loop (25), and **in that**
- the container belt unit (20) comprises two side walls (24a, b) closing the sides of the container loop (22).

2. Singling belt unit according to claim 1,
**characterized in that**
- the pretension on the pretensioned, in particular spring pretensioned, deflecting roller (26a) is variable,
- in particular the spring stiffness of the spring (26e) pretensioning the spring deflecting roller (26a) is adjustable, in particular automatically adjustable.

3. Singling belt unit according to one of the preceding claims,
**characterized in that**
- the container drive (27) and the removal drive (33) are functionally unified and together have only one drive motor,
- in particular the container control (20*) and the removal control (30*) are combined in one, in particular single, singling control (10*).

4. Singling belt unit according to any of the preceding claims,
**characterized in that**
- the container belt (21) is a finite container belt (21),
- which is fixed at at least one end on the circumference of a winding roll (16) and can be wound thereon and is fixed at the other end, in particular is only fixed at the other end,
- the container drive (27) drives the at least one winding roll (16).

5. Singling belt unit according to one of the claims 1 - 2,
**characterized in that**
- the container belt (21) is an endless container belt (21) which circulates over two horizontally spaced container deflecting rollers (23a, b).

6. Singling belt unit according to any of the preceding claims,
**characterized in that**
the spring deflecting roller (26a)
- is arranged either between a counterholder deflecting roller (26b) and a winding roller, in particular if the container belt (21) is finite,
- or between two counterholder deflecting rollers (26b, c), especially if the container belt (21) is endless.

7. Singling belt unit according to any of the preceding claims,
**characterized in that**
the removal conveyor (31) is an endless removal conveyor (31).

8. Singling belt unit according to claim 7,
**characterized in that**
the removal belt unit (30)
- has two horizontally spaced, fixedly positioned removal deflecting rollers (32a, b) over which the removal belt (31) for the products (P) runs and between which there is a substantially horizontally running upper run (31a) as a transport run for the products (P) lying thereon,
- the removal drive (33) drives at least one of the deflecting rollers (32a, b).

9. Singling belt unit according to one of the claims 1 - 8,
**characterized in that**
- either the container belt (21) and the removal belt (31) are functionally separated and integrally formed with each other as a singling belt (11),
- in particular the singling belt (11) is an endless separating belt (11), or a product transfer unit (40) is present between the container belt unit (20) and the removal belt unit (30), in particular a drop section or a slip (41).

10. Singling belt unit according to claim 9,
**characterized in that**
- the container drive (27) and the removal drive (33) are functionally unified and together have only one drive motor,
- the container control (20*) and the removal control (30*) are combined in a singling control (10*).

11. Singling belt unit according to any one of the preceding claims,
**characterized in that**
- a cross spreading device (50) is provided for spacing the products (P) arriving on the removal conveyor (31) or lying on the discharge conveyor (31) in the transverse direction (2),
in particular the cross spreading device (50)
- is a cross spreading slip (51) inclined not only in the running direction (1) but also in the cross direction (2) between the container belt (21) and the removal belt (31),
- or a spreadable belt, in particular a spreader belt (53), in particular in the form of belts (53.1, 53.2, 53.3) variable in their transcrosverse spacing as a belt or spacing-variable chain links (52.1, 52.2) of a link chain belt (52) as a belt.

12. Singling belt unit according to any one of the preceding claims,
**characterized in that**
- the container belt unit (20) has a scraper (28) at least at the outlet at a distance (A) above the downstream container deflecting roller (23a), the outlet roller (23a),
and/or
- the upstream container deflecting roller (23b) is either arranged higher than the downstream container deflecting roller (23a) or a rear wall (29) extends upward from the upstream container deflecting roller (23b) between the side walls.

13. **Method for separating** a bulk material from products (P) with the aid of at least one singling belt unit (10) according to one of the preceding claims,
where
- the size of the upwardly open container loop (22) of the container belt (21) is controlled in such a way that products (P) present in the container loop (22) pass over the downstream container deflecting roller (23a) of the container loop (22) to the desired extent, in particular continuously,
- the transport run, in particular the upper run (31a), of the removal belt (31) arranged downstream of the container loop (22) is driven in a controlled manner, in particular when products (P) from the container loop (22) pass over the downstream container deflecting roller (23a), onto the transport run (31a),
- the size of the container loop (22) is controlled by pretensioning the spring deflecting roller (26a) of the spring loop (25), which is located away from the container loop (22), preferably in the return run of the endless container belt (21), in the direction of increasing the size of the spring loop (25).

14. Method according to claim 13,
**characterized in that**
the spring stiffness of the spring (26e) dependent on the specific weight of the fill
- is either set manually
- or after filling a first batch of the new bulk material into the empty container loop (22), the spring stiffness of the spring (26e) is continuously increased from a - in particular adjustable - minimum value with the container belt (21) circulating until products, preferably to the desired extent, pass over the container deflecting roller (23a) of the container loop (22)
- or by means of a height sensor, the height of the bulk material in the container is monitored at the level of a maximum permissible bulk material height and, when the maximum bulk material height is reached, the spring stiffness of the spring (26e) is reduced by means of the sensor until the has fallen below the maximum bulk material height again.

## Revendications

1. **Unité de bande de séparation** (10) pour séparer des produits (P), avec
a) une unité de bande à récipients (20) comprenant
- une bande à récipients (21),
- au moins un rouleau de renvoi de récipient (23a) positionné de manière fixe, sur lequel passe la bande à récipients (21) et qui s'affaisse en amont de celle-ci pour former une boucle de récipient (22) ouverte en haut pour stocker des produits (P),
- un entraînement de récipient (27) pour déplacer la bande à récipients (21) sur le rouleau de renvoi de récipient (23a),
- une commande de récipient (20*) pour commander la taille de la boucle de récipient (22),
b) une unité de bande d'évacuation (30) en aval de la boucle de récipient (22) pour évacuer les produits (P) arrivant de la boucle de récipient (22) par le rouleau de renvoi de récipient (23a), comprenant
- une bande d'évacuation (31),
- un entraînement d'évacuation (33) pour la bande d'évacuation (31), pour déplacer au moins l'un des rouleaux de renvoi (32a) de l'unité de bande d'évacuation (30),
- une commande d'évacuation (30*) pour commander l'entraînement d'évacuation (33),
**caractérisé en ce que**
- l'unité de bande à récipients (20) présente une boucle de ressort (25) avec un rouleau de renvoi à ressort (26a) précontraint par ressort, mobile dans le sens de l'agrandissement ou de la réduction de la boucle de ressort (25), et **en ce que**
- l'unité de bande à récipients (20) comprend deux parois latérales (24a, b) qui ferment les côtés de la boucle de récipient (22).

2. Unité de bande de séparation selon la revendication 1,
**caractérisée en ce que**
- la précontrainte agissant sur le rouleau de renvoi à ressort (26a) précontraint, en particulier précontraint par ressort est variable,
- en particulier **en ce que** la raideur du ressort (26e) qui précontraint le rouleau de renvoi à ressort (26a) est réglable, en particulier réglable automatiquement.

3. Unité de bande de séparation selon l'une des revendications précédentes,
**caractérisée en ce que**
- l'entraînement de récipient (27) et l'entraînement d'évacuation (33) sont fonctionnellement réunis et ne présentent ensemble qu'un seul moteur d'entraînement,
- en particulier la commande de récipient (20*) et la commande d'évacuation (30*) sont réunies dans une commande de séparation (10*), en particulier unique.

4. Unité de bande de séparation selon l'une des revendications précédentes,
**caractérisée en ce que**
- la bande à récipients (21) est une bande à récipients (21) finie,
- qui est fixée à au moins une extrémité sur la périphérie d'un rouleau d'enroulement (16) et peut être enroulée sur celui-ci et est fixée à l'autre extrémité, en particulier est fixée à l'autre extrémité seulement,
- l'entraînement de récipient (27) entraîne ledit au moins un rouleau d'enroulement (16).

5. Unité de bande de séparation selon l'une des revendications 1 à 2,
**caractérisée en ce que**
- la bande à récipients (21) est une bande à récipients sans fin (21) qui passe sur deux cylindres de renvoi de récipients (23a, b) espacés horizontalement.

6. Unité de bande de séparation selon l'une des revendications précédentes,
**caractérisée en ce que**
le rouleau de renvoi à ressort (26a)
- est soit disposé entre un rouleau de renvoi à contre-support (26b) et un rouleau d'enroulement, notamment dans le cas où la bande à récipients (21) est finie,
- soit entre deux cylindres de renvoi à contre-support (26b, c), en particulier si la bande à récipients (21) est sans fin.

7. Unité de bande de séparation selon l'une des revendications précédentes,
**caractérisée en ce que**
la bande d'évacuation (31) est une bande d'évacuation sans fin (31).

8. Unité de bande de séparation selon la revendication 7,
**caractérisée en ce que**
l'unité de bande d'évacuation (30)
- présente deux rouleaux de renvoi d'évacuation (32a, b) positionnés de manière fixe et espacés horizontalement, sur lesquels passe la bande d'évacuation (31) pour les produits (P) et, entre eux, avec un brin supérieur (31a) s'étendant sensiblement horizontalement comme brin de transport pour les produits (P) reposant sur celui-ci,
- l'entraînement d'évacuation (33) entraîne au moins l'un des rouleaux de renvoi (32a, b).

9. Unité de bande de séparation selon l'une des revendications 1 à 8, **caractérisée en ce que**
- soit la bande à récipients (21) et la bande d'évacuation (31) sont réalisées en tant que bande de séparation (11) de manière fonctionnellement unie et d'un seul tenant l'une avec l'autre,
- en particulier la bande de séparation (11) est une bande de séparation sans fin (11), ou une unité de transfert de produit (40) est présente entre l'unité de bande à récipients (20) et l'unité de bande de transport (30), en particulier une section de chute ou une glissière (41).

10. Unité de bande de séparation selon la revendication 9,
**caractérisée en ce que**
- l'entraînement de récipient (27) et l'entraînement d'évacuation (33) sont unis fonctionnellement et ne présentent ensemble qu'un seul moteur d'entraînement,
- la commande de récipient (20*) et la commande d'évacuation (30*) sont réunies dans une commande de séparation (10*).

11. Unité de bande de séparation selon l'une des revendications précédentes,
**caractérisée en ce que**
- un dispositif d'écartement transversal (50) est présent pour espacer dans le sens transversal (2) les produits (P) arrivant sur la bande d'évacuation (31) ou se trouvant sur la bande d'évacuation (31),
en particulier le dispositif d'écartement transversal (50)
- est une glissière d'écartement transversal (51) inclinée non seulement dans le sens de la marche (1), mais aussi dans le sens transversal (2), entre la bande à récipients (21) et la bande d'évacuation (31),
- ou une bande expansible, en particulier une bande expansible (53), en particulier sous la forme de courroies (53.1, 53.2, 53.3) dont l'écartement transversal peut être modifié, en tant que bande, ou de maillons de chaîne (32.1, 32.2) dont l'écartement peut être modifié, d'une bande de chaîne à maillons (32) en tant que bande.

12. Unité de bande de séparation selon l'une des revendications précédentes,
**caractérisée en ce que**
- l'unité de bande à récipients (20) présente, au moins à la sortie, un racleur (28) à une distance (A) au-dessus du rouleau de renvoi de récipient (23a) situé en aval, le rouleau de sortie (23a),
et/ou
- le rouleau de renvoi de récipient amont (23b) est soit disposé plus haut que le rouleau de renvoi de récipient aval (23a), soit une paroi arrière (29) s'étend vers le haut à partir du rouleau de renvoi de récipient amont (23b) entre les parois latérales.

13. **Procédé pour séparer** un produit en vrac de produits (P) à l'aide d'au moins une unité de bande de séparation (10) selon l'une des revendications précédentes, dans lequel
- la taille de la boucle de récipient (22) ouverte vers le haut de la bande à récipients (21) est commandée de telle sorte que les produits (P) présents dans la boucle de récipient (22) arrivent dans la mesure souhaitée, en particulier en continu, au-dessus du rouleau de renvoi de récipient (23a) de la boucle de récipient (22) situé en aval,
- le brin de transport, en particulier le brin supérieur (31a), de la bande d'évacuation (31) disposée en aval de la boucle de récipient (22) est entraîné de manière commandée, en particulier lorsque des produits (P) provenant de la boucle de récipient (22) arrivent sur le brin de transport (31a) via le rouleau de renvoi de récipient (23a) situé en aval du rouleau de sortie,
- la taille de la boucle de récipient (22) est commandée par le fait que le rouleau de renvoi à ressort (26a) de la boucle de ressort (25), qui se trouve à l'écart de la boucle de récipient (22), de préférence dans le retour de la bande à récipients sans fin (21), est sollicité au moyen d'une précontrainte dans le sens de l'agrandissement de la boucle de ressort (25).

14. Procédé selon la revendication 13,
**caractérisé en ce que**
la raideur du ressort (26e) dépendant du poids spécifique du produit en vrac
- est soit réglé manuellement
- soit, après le remplissage d'une première charge du nouveau produit en vrac dans la boucle de récipient vide (22), la raideur du ressort (26e) est augmentée de plus en plus à partir d'une valeur minimale - en particulier réglable - lorsque la bande à récipients (21) circule, jusqu'à ce que des produits arrivent, de préférence dans la mesure souhaitée, au-dessus du rouleau de renvoi de récipient (23a) de la boucle de récipient (22),
- ou, au moyen d'un capteur de hauteur, on surveille la hauteur de déversement maximale admissible dans le récipient et, lorsque la hauteur de déversement maximale est atteinte, on réduit la raideur du ressort (26e) au moyen du capteur jusqu'à ce que la hauteur de déversement maximale ne soit plus atteinte.
